# FASCICULE DE BREVET EUROPEEN

(11) **EP 1 959 113 B1**
(45) Date de publication et mention de la délivrance du brevet: **31.08.2016**
(21) Numéro de dépôt: 08151586.8
(22) Date de dépôt: 18.02.2008
(51) Int. Cl.: F02C 7/32, F02C 7/36, F02C 9/22

(54) **Procédé de prélèvement d'énergie auxiliaire sur un turboréacteur d'avion et turboréacteur équipé pour mettre en oeuvre un tel procédé**
Verfahren zur Entnahme von Hilfsenergie aus einem Turbotriebwerk eines Flugzeugs und Turbotriebwerk, das für die Umsetzung eines solchen Verfahrens ausgestattet ist
Method of taking auxiliary energy on an airplane jet engine and jet engine equipped to implement such a method

(30) Priorité: 19.02.2007 FR 0753352
(43) Date de publication de la demande: 20.08.2008
(73) Titulaire: SNECMA, 75015 Paris (FR)
(72) Inventeur: Colotte, Baptiste, 77000, Melun (FR); Galivel, Jean Pierre, 77176, Savigny le Temple (FR); Zsiga, Zoltan, 77210, Avon (FR)
(74) Mandataire: Intès, Didier Gérard André

(56) Documents cités:
- EP-A- 1 617 053
- FR-A- 2 882 097
- GB-A- 1 320 530
- US-A- 2 803 943

## Description

L'invention concerne la production de l'énergie auxiliaire nécessaire pour les équipements de bord dans un avion, l'énergie étant prélevée sur le ou les turboréacteurs de cet avion.

Sur les nouveaux avions, les besoins d'énergie électrique sont de plus en plus importants. On utilise des générateurs électriques de plus en plus puissants. Un tel générateur électrique est entrainé par l'intermédiaire d'un turboréacteur de l'avion. Il est connu de prélever l'énergie mécanique nécessaire sur l'arbre lié à la turbine haute pression. Plus particulièrement, un arbre radial est mécaniquement couplé à l'arbre axial associé à ladite turbine haute pression et cette énergie est distribuée à une boîte d'engrenage entrainant un générateur électrique. Lorsque l'énergie électrique requise est importante, cette solution se traduit par des difficultés dans les phases de ralenti, au sol ou en vol, en raison du couple important opposé par le générateur électrique. Ce couple a tendance à faire fonctionner la turbine haute pression dans un domaine de fonctionnement non souhaité.

L'invention vise à renforcer ce système connu pour tenir compte des nouveaux besoins en énergie auxiliaire et par conséquent pour tenir compte du nouveau couple à transmettre sans affecter le fonctionnement de la turbine haute pression au ralenti.

EP 1 617 053 décrit un système qui prélève une partie des gaz éjectés par la turbine haute pression pour alimenter une turbine spécifique alimentant un générateur électrique. Les gaz chauds prélevés à la sortie de la turbine haute pressions nécessitant un refroidisseur.

L'idée de base de l'invention consiste, au ralenti, à dégrader le rendement de la turbine basse pression située en aval de la turbine haute pression, pour pouvoir augmenter la vitesse de rotation de la turbine haute pression (à un niveau permettant un prélèvement de puissance élevée) sans provoquer d'augmentation de la poussée du moteur, qui n'est pas souhaitée pendant les phases de fonctionnement au ralenti.

Plus précisément, l'invention concerne un procédé de prélèvement d'énergie auxiliaire sur un turboréacteur d'avion comportant, d'amont en aval, une turbine haute pression et une turbine basse pression, du type consistant à prélever ladite énergie par l'intermédiaire d'un arbre entraîné par la turbine haute pression, caractérisé en ce que, à l'intérieur d'une plage de fonctionnement au ralenti, on commande une dégradation du rendement de ladite turbine basse pression pour permettre à ladite turbine haute pression de fonctionner à un régime suffisant pour fournir l'énergie auxiliaire requise.

Ainsi, on abaisse le rendement de la turbine basse pression, afin de faire tourner celle-ci moins vite, pour un régime de turbine haute pression plus élevé.

Une dégradation de rendement de la turbine basse pression peut être obtenue en agissant sur le jeu radial des aubes mobiles de cette turbine basse pression.

Il est à noter que la variation du jeu radial des aubes mobiles est connue en soi (commande du type LPTACC) mais dédiée à un autre usage.

Selon une autre caractéristique avantageuse, on peut obtenir une dégradation de rendement de la turbine basse pression en agissant sur l'orientation d'au moins une partie des étages d'aubes de redresseur de cette turbine. Un système de calage variable des aubes de redresseur de la turbine basse pression est mis en place pour faire varier la vitesse de rotation de la turbine ( assimilable à une dégradation du rendement). Une combinaison de ces deux moyens est possible.

Un calculateur moteur permet de faire varier ces paramètres en fonction du régime du moteur et des besoins en énergie électrique. Ainsi, on peut éviter une augmentation de la poussée du moteur (par une perte de rendement contrôlée de la turbine basse pression) ce qui permet de maintenir la vitesse de la turbine haute pression à un niveau tel que, malgré une puissance prélevée importante, le point de fonctionnement de ladite turbine haute pression se situe au-dessus d'une valeur critique.

Selon une caractéristique avantageuse, on asservit la variation de rendement de ladite turbine basse pression à une mesure du couple fourni par un système de transmission mécanique (classique) agencé entre l'arbre entraîné par la turbine haute pression et un générateur électrique.

L'invention concerne également un turboréacteur d'avion comportant, d'amont en aval, une turbine haute pression et une turbine basse pression, un arbre entraîné par ladite turbine haute pression et un système de transmission mécanique couplé audit arbre pour prélever de l'énergie auxiliaire sur celui-ci, caractérisé en ce qu'il comporte des moyens de variation de rendement de ladite turbine basse pression et des moyens de commande desdits moyens de variation de rendement, ces moyens de commande étant pilotés par un capteur fournissant un signal représentatif de l'energie auxiliaire consommée.

Le système de transmission mécanique entraîne (entre autre équipements) un (ou des) générateur(s) électrique.

Lesdits moyens de variation de rendement peuvent comprendre un système de pilotage du jeu radial des aubes mobiles de la turbine basse pression et/ou un système de pilotage de l'orientation des aubes de redresseur de cette même turbine basse pression.

Avantageusement, lesdits moyens de variation de rendement comprennent un calculateur piloté par un capteur de couple lui-même associé audit système de transmission mécanique agencé entre ledit arbre entraîné par la turbine haute pression et ledit générateur électrique.

L'invention sera mieux comprise et d'autres avantages de celle-ci apparaîtront mieux à la lumière de la description qui va suivre, donnée uniquement à titre d'exemple et faite en référence aux dessins annexés dans lesquels :
- la figure 1 est une vue schématique en coupe d'un turboréacteur d'avion équipé d'un système de prélèvement d'énergie auxiliaire conforme à l'invention ;
- la figure 2 est une vue analogue à la figure 1 illustrant une variante.

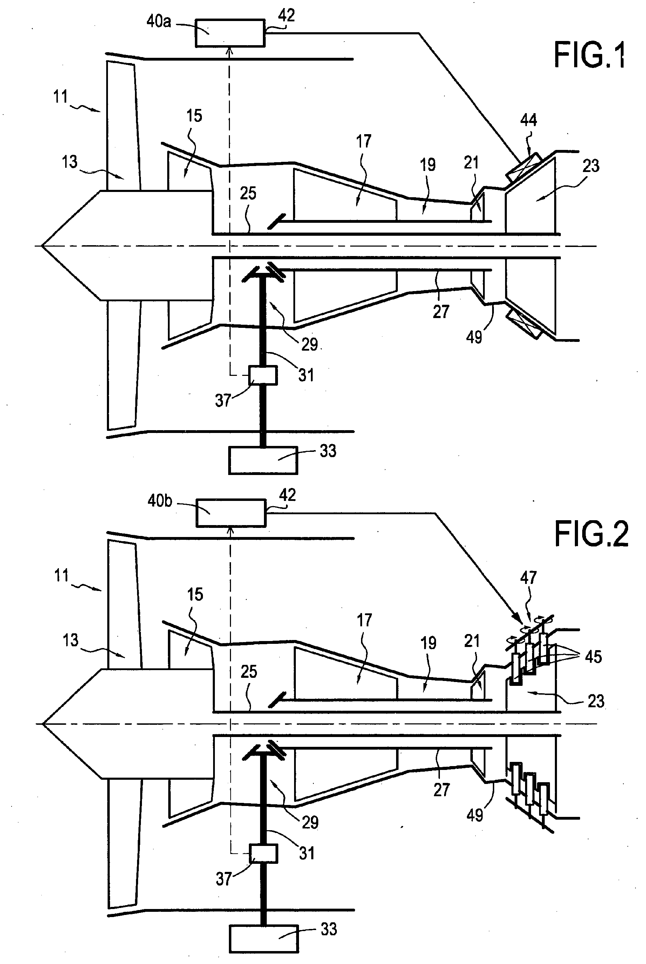

Les deux modes de réalisation schématisés respectivement sur les figures 1 et 2 peuvent être combinés en prévoyant un calculateur susceptible de commander les deux systèmes aptes à modifier le rendement de la turbine basse pression.

Le turboréacteur double flux 11 représenté sur la figure 1 comprend classiquement, d'amont en aval, une soufflante 13, un compresseur basse pression 15, un compresseur haute pression 17, une chambre de combustion 19, une turbine haute pression 21 et une turbine basse pression 23. La turbine basse pression 23 est mécaniquement liée à un arbre axial 25 entraînant la soufflante 13 et le compresseur basse pression 15. La turbine haute pression 17 est liée à un arbre axial 27 entraînant notamment le compresseur haute pression 17. Ce sous-ensemble est dénommé corps haute-pression. L'arbre 27 est mécaniquement couplé à un système de transmission mécanique 29 comprenant un arbre radial 31, entraînant un générateur électrique 33, par l'intermédiaire d'une démultiplication appropriée.

Le générateur électrique 33 destiné à fournir l'énergie électrique nécessaire aux équipements de bord et à tous les équipements des cabines de passagers est dorénavant d'une puissance élevée qui nécessite une transmission de couple importante par l'intermédiaire de l'arbre radial 31.

Dans l'exemple, ce couple est mesuré par l'intermédiaire d'un capteur de couple 37 associé à l'arbre radial 31. Ce capteur de couple délivre un signal représentatif du couple transmis par l'arbre radial 31 et par conséquent de l'énergie prélevée sur la turbine haute pression 21. Ce signal est appliqué à une entrée d'un calculateur 40 apte à piloter au moins un paramètre structurel de la turbine basse pression. Plus particulièrement, ce paramètre est l'un de ceux qui permet de faire varier (dégrader) le rendement de ladite turbine basse pression pour que la turbine haute pression puisse fonctionner à un régime suffisant au ralenti du moteur. L'énergie auxiliaire requise peut ainsi être prélevée sans que la turbine haute pression n'entre dans un domaine de fonctionnement non souhaité.

Dans l'exemple de la figure 1, le calculateur 40a intègre la fonction de pilotage du jeu radial des aubes mobiles de la turbine basse pression. La sortie de commande 42 de ce calculateur agit donc sur un système de pilotage 44 (connu en soi) du jeu radial de la turbine basse pression. Ce système de pilotage du jeu est du type LPTACC ; il est connu pour d'autres applications. Si le jeu radial des aubes augmente, le rendement de la turbine basse pression est dégradé, ce qui permet de faire fonctionner le corps haute pression au-dessus de son régime critique sans que la poussée de la soufflante 13 devienne incompatible avec un fonctionnement au ralenti.

Dans l'exemple de la figure 2, l'agencement général est le même et ne sera pas décrit à nouveau. Mais le calculateur 40b est cette fois conçu pour intégrer la fonction de pilotage de l'orientation variable des aubes de redresseur 45 de ladite turbine basse pression 23. Par conséquent, lesdites aubes de redresseur de cette turbine sont équipées d'un système à calage variable 47 actionné de l'extérieur du carter 49.

Bien entendu, comme mentionné précédemment, le calculateur peut intégrer les deux fonctions de pilotage mentionnées ci-dessus, à savoir celle du jeu radial des aubes mobiles et celle de l'orientation variable des aubes de redresseur.

Le signal délivré par le capteur de couple 37 est représentatif de l'énergie auxiliaire consommée qui est demandée au générateur électrique 33. Par conséquent, le signal délivré par le capteur de couple 37 est adressé au calculateur qui en déduit le niveau de "dégradation" du rendement de la turbine basse pression 23, nécessaire pour que le fonctionnement du corps haute pression puisse être maintenu à un niveau suffisant 13, au ralenti du moteur, sans que la poussée développée par la soufflante devienne incompatible avec un bon fonctionnement de ralenti.

## Revendications

1. Procédé de prélèvement d'énergie auxiliaire sur un turboréacteur d'avion comportant, d'amont en aval, une turbine haute pression (21) et une turbine basse pression (23), du type consistant à prélever ladite énergie par l'intermédiaire d'un arbre (27) entraîné par la turbine haute pression, **caractérisé en ce que**, à l'intérieur d'une plage de fonctionnement au ralenti, on commande une dégradation du rendement de ladite turbine basse pression (23) pour permettre à ladite turbine haute pression (21) de fonctionner à un régime suffisant pour fournir l'énergie auxiliaire requise.

2. Procédé selon la revendication 1, **caractérisé en ce qu'**une dégradation de rendement est opérée en agissant sur le jeu radial (44) des aubes mobiles de ladite turbine basse pression.

3. Procédé selon la revendication 1 ou 2, **caractérisé en ce qu'**une dégradation de rendement est opérée en agissant sur l'orientation (47) des aubes de redresseur de ladite turbine basse pression.

4. Procédé selon l'une des revendications précédentes, **caractérisé en ce que** l'on asservit la variation de rendement de ladite turbine basse pression à une mesure du couple (37) fournie par un système de transmission mécanique (29) agencé entre ledit arbre entraîné par la turbine haute pression et un générateur électrique (33).

5. Turboréacteur d'avion comportant, d'amont en aval, une turbine haute pression (21) et une turbine basse pression (23), un arbre (27) entraîné par ladite turbine haute pression et un système de transmission mécanique (29) couplé audit arbre pour prélever de l'énergie auxiliaire sur celui-ci, **caractérisé en ce qu'**il comporte des moyens de variation de rendement (44-47) de ladite turbine basse pression et des moyens de commande (40a-40b) desdits moyens de variation de rendement, ces moyens de commande étant pilotés par un capteur (37) fournissant un signal représentatif de l'énergie auxiliaire consommée.

6. Turboréacteur selon la revendication 5, **caractérisé en ce que** lesdits moyens de variation de rendement comprennent un système de pilotage du jeu radial (44) des aubes mobiles de ladite turbine basse pression.

7. Turboréacteur selon la revendication 5 ou 6, **caractérisé en ce que** lesdits moyens de variation de rendement comprennent un système de pilotage (47) de l'orientation des aubes de redresseur de ladite turbine basse pression.

8. Turboréacteur selon l'une des revendications 5 à 7, **caractérisé en ce que** lesdits moyens de variation de rendement comprennent un calculateur (40a-40b) piloté par un capteur de couple (37) associé à un système de transmission mécanique agencé entre ledit arbre entraîné par la turbine haute pression et un générateur électrique (33).

## Patentansprüche

1. Verfahren zur Entnahme von Hilfsenergie aus einem Flugzeugturboreaktor, umfassend von stromaufwärts nach stromabwärts eine Hochdruckturbine (21) und eine Niederdruckturbine (23), darin bestehend, die Energie mit Hilfe einer Welle (27) zu entnehmen, die von der Hochdruckturbine angetrieben wird, **dadurch gekennzeichnet, dass** innerhalb eines Funktionsbereichs im Leerlauf eine Degradierung der Leistung der Niederdruckturbine (23) gesteuert wird, um es der Hochdruckturbine (21) zu ermöglichen, mit einer ausreichenden Drehzahl zu funktionieren, um die erforderliche Hilfsenergie zu liefern.

2. Verfahren nach Anspruch 1, **dadurch gekennzeichnet, dass** eine Leistungsdegradierung durchgeführt wird, wobei auf das Radialspiel (44) der beweglichen Schaufeln der Niederdruckturbine eingewirkt wird.

3. Verfahren nach Anspruch 1 oder 2, **dadurch gekennzeichnet, dass** eine Leistungsdegradierung durchgeführt wird, wobei auf die Ausrichtung (47) der Leitapparatschaufeln der Niederdruckturbine eingewirkt wird.

4. Verfahren nach einem der vorhergehenden Ansprüche, **dadurch gekennzeichnet, dass** die Leistungsvariation der Niederdruckturbine einer Messung des Drehmoments (37) unterworfen ist, die von einem mechanischen Übertragungssystem (29) geliefert wird, das zwischen der von der Hochdruckturbine angetriebenen Welle und einem elektrischen Generator (33) angeordnet ist.

5. Turboreaktor eines Flugzeugs, umfassend von stromaufwärts nach stromabwärts eine Hochdruckturbine (21) und eine Niederdruckturbine (23), eine von der Hochdruckturbine angetriebene Welle (27) und ein mechanisches Übertragungssystem (29), das mit der Welle gekoppelt ist, um Hilfsenergie an dieser zu entnehmen, **dadurch gekennzeichnet, dass** er Mittel zur Leistungsvariation (44-47) der Niederdruckturbine und Steuermittel (40a-40b) der Mittel zur Leistungsvariation umfasst, wobei diese Steuermittel von einem Sensor (37) gesteuert werden, der ein Signal liefert, das für die verbrauchte Hilfsenergie repräsentativ ist.

6. Turboreaktor nach Anspruch 5, **dadurch gekennzeichnet, dass** die Mittel zur Leistungsvariation ein Steuersystem des Radialspiels (44) der beweglichen Schaufeln der Niederdruckturbine umfassen.

7. Turboreaktor nach Anspruch 5 oder 6, **dadurch gekennzeichnet, dass** die Mittel zur Leistungsvariation ein Steuersystem (47) der Ausrichtung der Leitapparatschaufeln der Niederdruckturbine umfassen.

8. Turboreaktor nach einem der Ansprüche 5 bis 7, **dadurch gekennzeichnet, dass** die Mittel zur Leistungsvariation einen Rechner (40a-40b) umfassen, der von einem Drehmomentsensor (37) gesteuert wird, der mit einem mechanischen Übertragungssystem verbunden ist, das zwischen der von der Hochdruckturbine angetriebenen Welle und einem elektrischen Generator (33) angetrieben wird.

## Claims

1. A method of taking auxiliary power from an airplane turbojet comprising, from upstream to downstream, a high pressure turbine (21) and a low pressure turbine (23), the method being of the type consisting in taking off said power via a shaft (27) driven by the high pressure turbine, and being characterized, within an idling operating range, by controlling degradation of the efficiency of said low pressure turbine (23) to enable said high pressure turbine (21) so as to operate at a speed that is sufficient for supplying the required auxiliary power.

2. A method according to claim 1, **characterized in that** efficiency is degraded by acting on the radial clearance (44) of the moving blades of said low pressure turbine.

3. A method according to claim 1 or claim 2, **characterized in that** efficiency is degraded by acting on the pitch (47) of the nozzle vanes of said low pressure turbine.

4. A method according to any preceding claim, **characterized in that** the variation in the efficiency of said low pressure turbine is servo-controlled to a measurement (37) of the torque delivered by a mechanical transmission system (29) arranged between said shaft driven by the high pressure turbine and an electricity generator (33).

5. An airplane turbojet comprising, from upstream to downstream, a high pressure turbine (21) and a low pressure turbine (23), a shaft (27) driven by said high pressure turbine, and a mechanical transmission system (29) coupled to said shaft to take auxiliary power therefrom, the turbojet being **characterized in that** it includes efficiency-varying means (44-47) for varying the efficiency of said low pressure turbine and control means (40a-40b) for controlling said efficiency-varying means, said control means being controlled by a sensor (37) delivering a signal representative of the amount of auxiliary power being consumed.

6. A turbojet according to claim 5, **characterized in that** said efficiency-varying means comprise a system for controlling the radial clearance (44) of the moving blades of said low pressure turbine.

7. A turbojet according to claim 5 or claim 6, **characterized in that** said efficiency-varying means comprise a system (47) for controlling the pitch of the nozzle vanes of said low pressure turbine.

8. A turbojet according to any one of claims 5 to 7, **characterized in that** said efficiency-varying means comprise a computer (40a-40b) controlled by a torque sensor (37) associated with a mechanical transmission system arranged between said shaft driven by the high pressure turbine and an electricity generator (33).
